# EUROPÄISCHE PATENTANMELDUNG

(11) **EP 0 848 185 A2**
(43) Veröffentlichungstag der Anmeldung: **17.06.1998**
(21) Anmeldenummer: 97119931.0
(22) Anmeldetag: 14.11.1997
(51) Int. Cl.: F16F 13/30

(54) **Dämpferelement und Schwingungsdämpfer mit einem solchen**

(30) Priorität: 14.11.1996 DE 19647136
(71) Anmelder: Stop-Choc Schwingungstechnik GmbH & Co KG, D-71272 Renningen (DE)
(72) Erfinder: Helldörfer, Thomas, 75397 Simmozheim (DE); Ottmar, Horst, 71154 Nufringen (DE)
(74) Vertreter: Ostertag, Reinhard

(57) **Zusammenfassung**

Es wird ein ohne mechanische Änderungen in seiner Dämpfungscharakteristik einstellbares Dämpferelement (18) vorgeschlagen, in welchem eine elektrovisköse Dämpferflüssigkeit (48) verwendet wird. Diese ist über Drosselplatten (36, 38) zwischen zwei Arbeitsräumen (42, 44) gemäß der dem Dämpferelement (18) aufgeprägten Bewegung verschiebbar. Die Drosselplatten (36, 38) sind zugleich Elektroden und mit den beiden Ausgangsklemmen eines Gleichstrom-Hochspannungsgenerators (50) verbunden.

## Beschreibung

Die Erfindung betrifft ein Dämpferelement gemäß dem Oberbegriff des Anspruches 1 sowie einen Schwingungsdämpfer mit einem solchen.

Dämpferelemente, die nach dem Prinzip der Drosselung eines durch ein Eingangsteil bewegten Dämpfungsmediums arbeiten, sind in unterschiedlicher Form bekannt, z.B. in Form von Stoßdämpfern. Derartige Dämpferelemente haben eine fest vorgegebene Arbeitscharakteristik, die sich aus der Geometrie des Dämpfers, der Geometrie der Drosseleinrichtung und der Viskosität des Dämpfungsmediums ergibt.

Im Prinzip kann man derartigen Stoßdämpfern eine einstellbare Arbeitscharakteristik geben, indem man den Drosselquerschitt der Drosseleinrichtung durch Verstellen eines beweglichen Teiles der Drosseleinrichtung verändert. Derartige Dämpferelemente haben aber mechanisch komplizierten Aufbau und können sich bei starken Erschütterungen auch unkontrolliert verstellen.

Durch die vorliegende Erfindung soll daher ein Dämpfungselement mit einstellbarer Dämpfungscharakteristik geschaffen werden, bei welcher man die Dämpfung ohne Veränderung der Dämpfergeometrie zuverlässig einstellen kann.

Diese Aufgabe ist erfindungsgemäß gelöst durch ein Dämpfungselement mit den im Anspruch 1 angegebenen Merkmalen.

Vorteilhafte Weiterbildungen der Erfindung sind in Unteransprüchen angegeben.

Die Weiterbildungen der Erfindung gemäß den Ansprüchen 2, 4 und 6 betreffen vorteilhafte Ausgestaltungen der Drosseleinrichtung. Dabei hat die Drosseleinrichtung gemäß Anspruch 2 den Vorteil, daß bei ihr der Strom des Dämpfungsmediums im wesentlichen in axialer Richtung zwischen den beiden Arbeitsräumen erfolgt. Das Dämpfungsmedium wird also nicht makroskopisch in radialer Richtung bewegt. Eine derartige Drosseleinrichtung läßt sich auch für verhältnismäßig große Gesamt-Durchströmquerschnitte auslegen. Die gleichen Vorteile bietet die Drosseleinrichtung gemäß Anspruch 4. Bei der Drosseleinrichtung gemäß Anspruch 6 wird das Dämpfungsmedium in im wesentlichen zur Achse der Arbeitsräume senkrechte Richtung durch den Drosselspalt bewegt, welcher durch die beiden beabstandeten Spaltplatten definiert ist. Auf diese Weise läßt sich eine starke Drosselung des Dämpfungsmediums ohne aufwendige Präzisionsbearbeitung der Teile der Drosseleinrichtung erzielen.

Die Weiterbildungen der Erfindung gemäß den Ansprüchen 3, 5 und 7 geben für die bevorzugten Drosseleinrichtungen nach den Ansprüchen 2, 4 und 6 an, wie man das elektrische Feld, welches die Viskosität des elektroviskosen Dämpfungsmediums beeinflußt, unmittelbar dort erzeugen kann, wo es auch von Interesse ist, nämlich an der Drosselstelle bzw. den Drosselstellen.

Bildet man das Gehäuse des Dämpferelementes gemäß Anspruch 8 aus, so läßt sich dieses aus besonders einfache Geometrie aufweisenden Teilen aufbauen.

Ein Dämpfergehäuse gemäß Anspruch 9 läßt sich einfach aus Drehteilen und handelsüblichen Membranen zusammenbauen.

Ein Dämpfergehäuse, wie es im Anspruch 10 angegeben ist, eignet sich besonders gut für Dämpferelemente mit großem Arbeitshub. Auch die Komponenten dieses Dämpfergehäuses sind als Standard-Maschinenteile im Handel erhältlich.

Bei einem Dämpferelement gemäß Anspruch 11 kann man schon in das Dämpferelement eine Feder integrieren, ohne daß hierdurch die Baugröße erhöht würde. Damit kann das Dämpferelement schon selbst Schwingungsdämpferaufgaben erfüllen. Außerdem ist gewährleistet, daß das Dämpferelement im unbelasteten Zustand in eine definierte Ausgangslage zurückkehrt.

Mit der Weiterbildung der Erfindung gemäß Anspruch 12 wird erreicht, daß die Balgwände eines Dämpfergehäuses nach Anspruch 10 nicht überbeansprucht werden können, da das Ende des Arbeitshubes durch eine Feder begrenzt wird.

Die Weiterbildung der Erfindung gemäß Anspruch 13 erlaubt es, den jeweiligen Betätigungsweg des Dämpferelementes zu messen und diese Messung dazu zu verwenden, die Dämpfungscharakteristik des Dämpferelementes wegabhängig einzustellen. Dies ermöglicht, insbesondere zu Ende des Arbeitshubes, eine härtere Dämpfungscharakteristik vorzugeben, und ermöglicht auch, für den Rückhub des Dämpferelementes eine schwächere Dämpfung des Dämpfungsmediums einzustellen. Derartige richtungsabhängige Dämpfereigenschaften sind zwar an sich aus bekannten Flüssigkeitsdämpfern bekannt, man benötigt dort zu ihrer Realisierung aber Rückschlagventile, die zuweilen nicht zuverlässig arbeiten, und deren Öffnungsverhalten unverändertlich vorgegeben ist, während man bei dem erfindungsgmäßen Dämpferelement die Arbeitscharakteristik auch am Einsatzort noch einfach einstellen kann.

Bei einem Dämpferlement gemäß Anspruch 14 lassen sich Temperatureinflüsse auf die Dämpfercharakteristik kompensieren.

Ein Schwingungsdämpfer, wie er in Anspruch 15 angegeben ist, läßt sich auf sehr einfache Weise in seinem Dämpfungsverhalten einstellen. So kann man insbesondere den Schwingungsdämpfer noch am Einsatzort auf die exakt auf ihm ruhende Last, auf die von der Last auf den Schwingungsdämpfer ausgeübten Frequenzen und auf die am Einsatzort herrschende Temperatur einstellen, indem man den Kennlinienkreis (z.B. ein Festwertspeicher) entsprechend programmiert.

Bei einem Schwingungsdämpfer gemäß Anspruch 16 wird durch eine vom Dämpferelement unabhängige Anschlageinrichtung der Weg des Dämpferelementes begrenzt, wodurch letzteres vor Beschädigung geschützt ist.

Durch die Weiterbildung der Erfindung gemäß Anspruch 17 kann die Anschlageinrichtung zugleich eine teleskopähnliche Abdeckung für das Dämpferelement bilden.

Die Weiterbildung der Erfindung gemäß Anspruch 18 ist im Hinblick auf einen kompakten Schwingungsdämpfer mit großem Gesamtvolumen der Federanordnung von Vorteil.

Mit der Weiterbildung der Erfindung gemäß Anspruch 19 wird erreicht, daß die den Anschlagstift tragende Hülse zugleich als Ausknick-Abstützung für die Schraubenfedern des Schwingungsdämpfers dienen kann.

Nachstehend wird die Erfindung anhand von Ausführungsbeispielen unter Bezugnahme auf die Zeichnung näher erläutert. In dieser zeigen:
- Figur 1:: einen axialen Schnitt durch einen ersten Schwingungsdämpfer mit einem elektroviskösen Dämpferelement mit elektrisch steuerbarer Dämpfungscharakteristik;
- Figur 2:: einen ähnlichen Schnitt wie Figur 1, in welchem jedoch ein abgewandelter Schwingungsdämpfer gezeigt ist, der darüber hinaus mit wegabhängiger Dämpfungscharakteristik arbeitet und mit einer Temperaturkompensation versehen ist;
- Figur 3:: einen vergrößerten Ausschnitt von Figur 2: und
- Figur 4:: eine axialen Schnitt durch einen weiteren Schwingungsdämpfer mit elektrisch steuerbarer Arbeitscharakteristik.

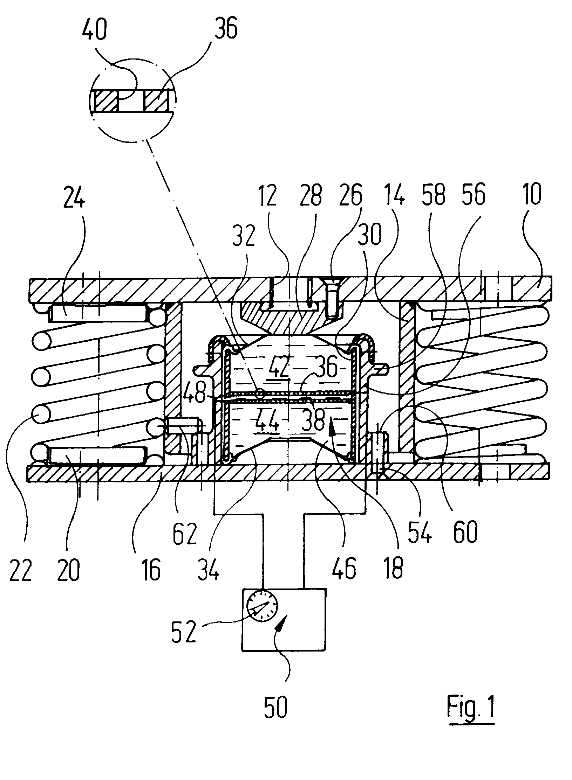

In Figur 1 ist mit 10 eine obere Lastplatte eines Schwingungsdämpfers bezeichnet. An dieser ist über ein Gewinde 12 eine Last befestigbar, die zu dämpfende Schwingungen erzeugt.

An die Unterseite der Lastplatte 10 ist eine Hülse 14 angeschweißt.

Eine Basisplatte 16 des Schwingungsdämpfers trägt ein insgesamt mit 18 bezeichnetes Dämpferelement. In dem über die Hülse 14 radial überstehenden Abschnitt hat die Basisplatte 16 eine Mehrzahl in Umfangsrichtung verteilter Federsitze 20, über welche die unteren Enden einer Mehrzahl von Schraubenfedern 22 geschoben sind. Ähnlich trägt die Unterseite der Lastplatte 10 Federsitze 24, welche in die oberen Enden der Schraubenfedern 22 eingreifen.

An die Unterseite der Lastplatte 10 ist mittels dreier in Umfangsrichtung verteilter Schrauben 26 ein Eingangsteil 28 des Dämpferelementes 18 angeschraubt.

Das Dämpferelement 18 hat eine aus elektrisch isolierendem Material hergestellte zylindrische Umfangswand 30, die oben und unten jeweils durch eine kegelstumpfförmige Membran 32 bzw. 34 dicht verschlossen ist. Bei der Mitte der Umfangswand 30 sind zwei beabstandete Lochplatten 36, 38 vorgesehen, die jeweils eine Vielzahl von Drosselöffnungen 40 aufweisen. Die beiden Lochplatte 36, 38 unterteilen den Innenraum des durch die Umfangswand 30 und die Membranen 32, 34 gebildeten Dämpfergehäuses in zwei Arbeitsräume 42, 44. Diese Arbeitsräume sowie der zwischen den Lochplatten 36, 38 liegende Raum sind mit einer elektroviskösen Dämpferflüssigkeit 46 gefüllt.

Die Lochplatten 36, 38 sind aus elektrisch leitendem Material hergestellt und durch einen Distanzring 48 beabstandet. Die Lochplatten 36, 38 sind mit den beiden Ausgangsklemmen eines Gleichstrom-Hochspannungsgenerators 50 verbunden, dessen Ausgangsspannung einstellbar ist, wie durch einen Drehgriff 52 angedeutet.

Das Dämpferelement 18, welches selbst zur Achse der Lastplatte 10 koaxial ist, ist von einer ebenfalls zur Achse der Lastplatte 10 koaxialen Anschlaghülse 56 umgeben. Diese hat einen oberen Anschlagflansch 58 sowie eine untere Anschlagschulter 60. Die Unterseite des Anschlagflansches 58 und die Anschlagschulter 60 arbeiten mit einem Anschlagstift 62 zusammen, der von der Hülse 14 getragen ist und von dieser radial nach innen weist. Auf diese Weise sind eine obere und eine untere Endlage der Lastplatte 10 vorgegeben.

In Figur 1 ist der Schwingungsdämpfer im voll eingefederten Zustand wiedergegeben, in welcher der Anschlagstift 62 an der Anschlagschulter 60 anliegt. Das Eingangsteil 28 hat die Membran 32 nach unten gedrückt, wodurch Dämpferflüssigkeit 46 aus dem oberen Arbeitsraum 42 über die Drosselöffnungen 44 nach unten gedrückt wurde. Aufgrund der an die Lochplatten 36, 38 angelegten hohen Gleichspannung ist die Viskosität der Dämpferflüssigkeit 46 bei dem Strömen durch die Drosselöffnungen 40 gegenüber dem feldfreien Fall erhöht.

Wird, ausgehend vom in Figur 1 gezeigte Zustand, die Lastplatte 10 entlastet, so kehrt sie unter der Kraft der Schraubenfedern 22 in ihre obere Endlage zurück, in welcher der Anschlagstift 62 an der Unterseite des Anschlagflansches 58 anliegt. Bei dieser Bewegung wird die Membran 32 vom Eingangsteil 28 nach oben gezogen und saugt Dämpferflüssigkeit aus dem unteren Arbeitsraum 44 in den oberen Arbeitsraum 42. Wiederum erhöht sich aufgrund des zwischen den Lochplatten 36, 38 aufgebauten elektrischen Feldes die Viskosität der Dämpferflüssigkeit 46 bei den Drosselöffnungen 40, so daß man eine stärkere Dämpfung erhält, als dann, wenn die Dämpferflüssigkeit 46 sich nicht in einem elektrischen Feld befindet.

Aus der obenstehenden Beschreibung ist ersichtlich, daß man durch Verstellen des Drehgriffes 52 die Arbeitscharakteristik des Dämpferelementes 18 und damit des gesamten Schwingungsdämpfers auf einfache Weise kontinuierlich einstellen kann.

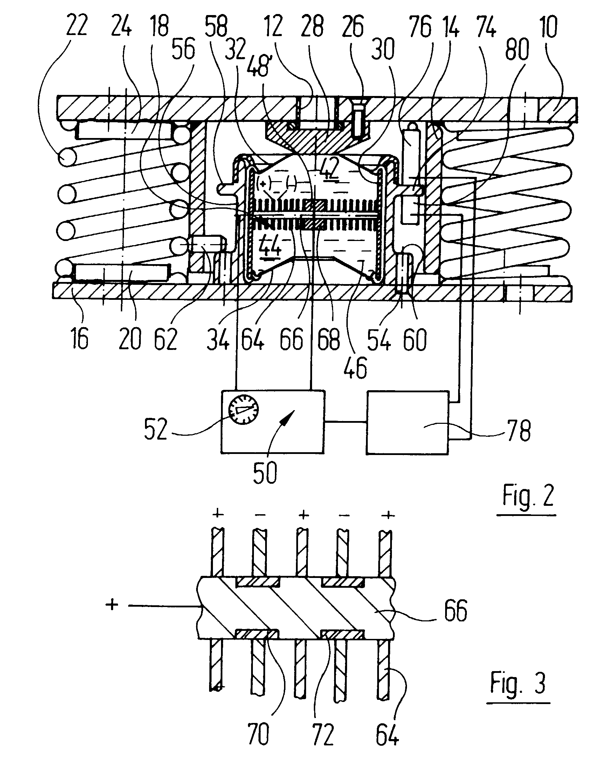

Beim Ausführungsbeispiel nach Figur 2 sind Teile des Schwingungsdämpfers, die von der Funktion her Teilen des oben beschriebenen Schwingungsdämpfers entsprechen, wieder mit denselben Bezugszeichen versehen. Diese Teile brauchen nachstehend nicht nochmals im einzelnen beschrieben zu werden.

Die Drosselung der Dämpferflüssigkeit 46 beim Übergang vom einen der Arbeitsräume 42, 44 in den anderen umfaßt nun eine Mehrzahl koaxialer Ringteile 64, die auf zwei gekreuzten Tragstäben 66, 68 angeordnet sind, die speichenähnlich in eine nabenähnliches Distanzteil 48' eingesetzt sind. Die Tragstäbe 66, 68 sind aus Metall gefertigt, haben aber (vgl. Figur 3) am Ort jedes zweiten der Ringteile 64 eine Nut 70, die mit einem isolierenden Material 72 ausgefüllt ist. Die Nuten 70 der beiden Tragstäbe 66, 68 sind in radialer Richtung um eine Teilung gegeneinander versetzt, so daß jedes zweite der Ringteile 64 elektrisch leitend mit dem Tragstab 66 verbunden ist, die dazwischenliegenden Ringteile elektrisch leitend mit dem Tragstab 68 verbunden sind. Die beiden Tragstäbe 66, 68 sind mit den beiden Ausgangsklemmen des Gleichstrom-Hochspannungsgenerators 52 verbunden. Es versteht sich, daß man zur Mehrpunktabstützung in Umfangsrichtung verteilt zusätzlich weitere isolierende Tragstäbe oder den Tragstäben 66, 68 entsprechende Tragstäbe vorsehen kann.

Auf einem Ansatz 74 des Anschlagflansches 58 ist ein digitaler Stellungsgeber 76 vorgesehen, der mit der Unterseite der Lastplatte 10 zusammenarbeitet. Das Ausgangssignal des Stellungsgebers 76 wird auf eine der Eingangsklemmen eines Kennlinienkreises 78 gegeben. Ein zweiter Eingang des Kennlinienkreises 78 ist mit dem Ausgang eines an die Unterseite des Ansatzes 74 thermisch angekoppelten digitalen Temperaturfühlers 80 angeschlossen.

Der Kennlinienkreis 78 enthält - z.B. in Stufen von 1^{o}C bzw. 0,1 mm gestuft und in einem ROM abgelegt - eine Vielzahl von Kennlinien, von denen jeweils eine gemäß dem Ausgangssignal des Temperaturfühlers 80 ausgewählt wird. Gemäß dem Ausgangssignal des Stellungsgebers 76 wird ein Wert der jeweils aktivierten Kennlinie an der Ausgangsklemme des Kennlinienkreises 78 bereitgestellt und auf eine Steuerklemme des Gleichstrom-Hochspannungsgenerators 52 gegeben.

Die Steuerung der Ausgangsspannung des Gleichstorm-Hochspannungsgenerators 52 erfolgt somit insgesamt derart, daß die Viskosität der Dämpferflüssigkeit 46 bei den Drosselöffnungen 40 zum einen unabhängig von der Temperatur eingestellt wird, auf welcher sich das Dämpferelement 18 gerade befindet, andererseits in vorgebener Weise wegabhängig eingestellt wird.

Typische Kennlinie, wie sie im Kennlinienkreis 78 abgespeichert sein können, sind z.B. ansteigende Geraden, wodurch man eine mit dem Weg zunehmende Dämpfung erhält. Dabei versteht sich, daß man dann, wenn man eine exakt lineare Zunahme der Dämpfung wünscht, in die Kennlinie mit einarbeiten muß, daß die Viskosität der Dämpferflüssigkeit keine lineare Abhängigkeit vom angelegten Feld zeigt. Weitere gut geeignete Kennlinien sind z.B. solche, welche mit zunehmendem Weg zunächst eine abfallende Flanke und dann wieder eine ansteigende Flanke aufweisen. Legt man den tiefsten Punkt der Kennlinie an den Punkt, der der Einfederung der Lastplatte 10 unter einer normalen Betriebslast entspricht, so hat man in der Umgebung dieses Arbeitspunktes kleinere Dämpfung als bei größeren Auslenkungen der Lastplatte 10 von der Gleichgewichtslage nach beiden Richtungen.

Auch kompliziertere Kennlinien, die im Hinblick auf spezielle Anwendungen vorteilhaft sind, lassen sich mit dem oben beschriebenen Konzept auf einfache Weise realisieren. Damit erhält man insgesamt auch einen Schwingungsdämpfer, der ohne mechanische Eingriffe einfach für sehr unterschiedliche Aufgaben optimiert werden kann.

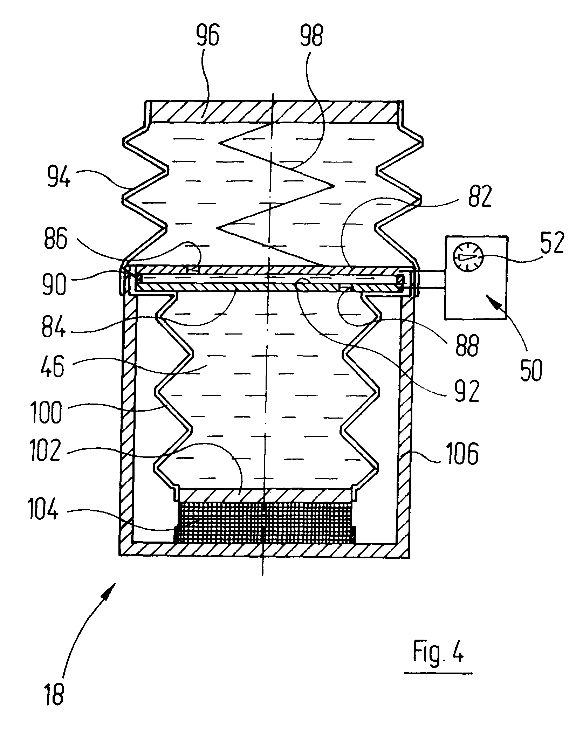

Beim Ausführungsbeispiel nach Figur 4 dienen zum Drosseln der Dämpferflüssigkeit 46 zwei eng benachbarte Spaltplatten 82, 84. Diese habe an einander radial gegenüberliegenden äußeren Stellen jeweils eine Durchgangsöffnung 86 bzw. 88.

Die beiden Spaltplatten 82, 84 sind wieder aus elektrisch leitendem Material hergestellt und durch einen isolierenden Ring 90 beabstandet. Dessen Höhe gibt die Breite eines Drosselspaltes 52 vor, über welchen Dämpferflüssigkeit 46 von der Durchgangsöffnung 86 zur Durchgangsöffnung 88 fließen kann oder umgekehrt. Zur Steuerung des Viskosität der Dämpferflüssigkeit 46 im Drosselspalt 92 sind die beiden Spaltplatten 82, 84 wieder mit den Ausgangsklemmen eines Gleichstrom-Hochspannungsgenerators 52 verbunden.

Auf der Oberseite der Spaltplatte 82 ist ein Metallbalg 94 vorgesehen, dessen oberes Ende durch eine Stirnplatte 96 verschlossen ist. Diese dient zugleich als Eingangsteil für das Dämpferelement nach Figur 3. Im Inneren des durch den Metallbalg 94, die Stirnplatte 96 und die Spaltplatte 82 begrenzten Arbeitsraumes 42 ist eine Schraubenfeder 98 vorgesehen.

Ähnlich ist mit der Unterseite der Spaltplatte 84 ein Metallbalg 100 dicht verbunden, dessen untere Seite durch eine Stirnplatte 102 verschlossen ist. Mit der Stirnplatte 102 arbeitet ein aus kompaktiertem Edelstahlgewirk hergestelltes Federkissen 104 zusammen, welches vom Boden eines becherförmigen Außengehäuses 106 getragen ist, das den Metallbalg 100 unter Spiel umgibt und am oberen Rand die Spaltplatten 82, 84 und die Metallbalge 94, 100 trägt. Das Federkissen 104 dient als progressiv einfedernder Anschlag für die untere Endlage des Dämpferelementes 18.

Diese Endlage ist in Figur 4 dargestellt.

Bei Entlastung der oberen Stirnplatte 96 wird unter der Kraft der Schraubenfeder 98 Dämpferflüssigkeit 46 über den Drosselspalt 92 aus dem unteren Arbeitsraum 44 in den oberen Arbeitsraum 42 gesaugt, wobei das Ausmaß der Flüssigkeitsdämpfung durch die an die Spaltplatten 82, 84 angelegte Gleichspannung vorgegeben wird. Mit dem Nachobensaugen von Dämpferflüssigkeit 46 hebt sich dann die Stirnplatte 102 vom Federkissen 104 ab.

Hat die Stirnplatte 96 unter der Kraft der Schraubenfeder 98 ihre obere Endstellung oder eine Zwischenstellung erreicht, und wird auf die Stirnplatte 96 wieder eine Kraft ausgeübt bzw. die auf sie einwirkende Kraft vergrößert, so wird Dämpferflüssigkeit 46 über den Drosselspalt 92 vom oberen Arbeitsraum 42 in den unteren Arbeitsraum 44 gedrückt, wobei das Ausmaß der Flüssigkeitsdämpfung wieder durch die am Ausgang des Gleichstrom-Hochspannungsgenerators 52 anstehende Gleichspannung vorgegeben wird.

## Patentansprüche

1. Dämpferelement mit einem Gehäuse (30 bis 34; 94, 96, 100, 102), mit Mitteln (36, 38; 64; 82, 84) zum Unterteilen des Inneren des Gehäuses (30 bis 34; 94, 96, 100, 102) in zwei Arbeitsräume (42, 44), mit einer die beiden Arbeitsräume (42, 44) verbindenden Drosseleinrichtung (36, 38; 64; 82, 84), mit einem die Arbeitsräume (42, 44) füllenden Dämpfungsmedium (46) und mit einem mit einer Last verbindbaren Eingangsteil (28; 96), welches mit einem bewegbaren Wandabschnitt des Gehäuses verbunden ist, welcher einen der Arbeitsräume (42, 44) teilweise begrenzt, dadurch gekennzeichnet, daß das Dämpfungsmedium (46) ein elektrovisköses Medium ist, und daß eine Einrichtung (32, 34, 50; 64, 50; 82, 84, 50) zum Erzeugen eines elektrischen Feldes zumindest im Bereich der Drosseleinrichtung (36, 38; 64; 82, 84) vorgesehen ist.

2. Dämpferelement nach Anspruch 1, dadurch gekennzeichnet, daß die Drosseleinrichtung eine Lochplattenanordnung (36, 38) umfaßt.

3. Dämpferelement nach Anspruch 2, dadurch gekennzeichnet, daß die Lochplattenanordnung zwei beabstandte parallele Lochplatten (36, 38) aufweist, die aus elektrisch leitendem Material hergestellt sind und von denen mindestens eine elektrisch isoliert ist und welche mit jeweils einer der Ausgangsklemmen eines Gleichstrom-Hochspannungsgenerators (50) verbunden sind.

4. Dämpferelement nach Anspruch 1, dadurch gekennzeichnet, daß die Drosseleinrichtung eine Vielzahl koaxialer Ringteile (64) aufweist, welche zwischen ihnen liegende zylindrische Drosselspalte vorgeben.

5. Dämpferelement nach Anspruch 4, dadurch gekennzeichnet, daß die Ringteile (64) alternierend mit der einen bzw. der anderen Ausgangsklemme eines Gleichstrom-Hochspannungsgenerators (50) verbunden sind, wobei die Sätze von Ringteilen abwechselnd auf elektrisch isolierenden bzw. elektrisch leitenden Abschnitten von Tragmitteln (66, 68) sitzen.

6. Dämpferelement nach Anspruch 1, dadurch gekennzeichnet, daß die Drosseleinrichtung zwei beabstandete Spaltplatten (82, 84) aufweist, die zwischen sich einen Drosselspalt (92) vorgeben.

7. Dämpferelement nach Anspruch 6, dadurch gekennzeichnet, daß die Spaltplatten (82, 84) mit der einen bzw. der anderen Ausgangsklemme eines Gleichstrom-Hochspannungsgenerators (50) verbunden sind, wobei mindestens eine der Spaltplatten elektrisch isoliert angeordnet ist.

8. Dämpferelement nach einem der Ansprüche 1 bis 7, dadurch gekennzeichnet, daß das Gehäuse eine starre Umfangswand (30) und bewegliche Stirnwände (32, 34) aufweist.

9. Dämpferelement nach Anspruch 8, dadurch gekennzeichnet, daß die beweglichen Stirnwände kegelstumpfförmige Membranen (32, 34) sind, deren Oberfläche im unbelasteten Zustand des Dämpferelementes im wesentlichen parallel zueinander verlaufen.

10. Dämpferelement nach einem der Ansprüche 1 bis 7, dadurch gekennzeichnet, daß das Gehäuse starre Stiwände (96, 102) und zwei als Balg ausgebildete Umfangswände (94, 100) aufweist, von denen die eine über, die andere unterhalb der Drosseleinrichtung (82, 84) liegt.

11. Dämpferelement nach Anspruch 10, dadurch gekennzeichnet, daß im Inneren mindestens einer (94) der als Balg ausgebildeten Umfangswände (94, 100) eine Feder (98) angeordnet ist.

12. Dämpferelement nach Anspruch 10 oder 11, gekennzeichnet durch eine Anschlagfeder (104), welche mit derjenigen (102) der Stirnwände (96, 102) des Gehäuses zusammenarbeitet, die nicht mit der Eingangsbewegung beaufschlagt ist, wobei die Anschlagfeder vorzugsweise ein Federkissen aus kompaktiertem Federstahlgewirk ist.

13. Dämpferelement nach einem der Ansprüche 1 bis 12, dadurch gekennzeichnet, daß die Felderzeugungseinrichtung (36, 38, 50; 64, 50; 82, 84, 50) eine Feldstärke-Steuerklemme aufweist, die mit dem Ausgang eines den Weg des Eingangsteiles messenden Stellungsgebers (76) verbunden ist.

14. Dämpferelement nach einem der Ansprüche 1 bis 13, dadurch gekennzeichnet, daß die Felderzeugungseinrichtung (36, 38, 50; 64, 50; 82, 84, 50) eine Feldstärke-Steuerklemme aufweist, die mit dem Ausgang eines die Temperatur des Dämpferelementes messenden Temperaturfühlers (80) verbunden ist.

15. Dämpferelement nach Anspruch 13 oder 14, dadurch gekennzeichnet, daß zwischen den Ausgang des Stellungsgebers (76) und/oder des Temperaturfühlers (80) einerseits und dem Steuereingang der Felderzeugungseinrichtung (36, 38, 50; 64, 50; 82, 84, 50) mindestens ein Kennlinienkreis (78) geschaltet ist.

16. Schwingungsdämpfer nach Anspruch 16, dadurch gekennzeichnet, daß das Dämpferelement (18) von einer mindestens eine Anschlagschulter (58, 60) aufweisenden Anschlaghülse (56) umgeben ist, die mit einem Anschlagstift (62) zusammenarbeitet, der mit einem Eingangsteil (10) des Schwingungsdämpfers mitbewegt wird.

17. Schwingungsdämpfer nach Anspruch 16, dadurch gekennzeichnet, daß der Anschlagstift (62) von einer Hülse (14) getragen ist, die mit dem plattenförmig ausgebildeten Eingangsteil (10) des Schwingungsdämpfers verbunden ist.

18. Schwingungsdämpfer nach Anspruch 16 oder 17, dadurch gekennzeichnt, daß die Federanordnung eine Mehrzahl von Schraubenfedern (22) aufweist, die in Umfangsrichtung gleich verteilt außerhalb der Anschlaghülse (56) angeordnet sind und deren eine Enden an der Unterseite des plattenförmigen Eingangsteiles (10) bzw. der Oberseite einer Basisplatte (16) angreifen.

19. Schwingungsdämpfer nach Anspruch 18, dadurch gekennzeichnet, daß die innenliegenden Mantellinien der Einhüllenden der Schraubenfedern (22) unter kleinem Abstand vor der Außenfläche der Anschlaghülse (56) liegen oder im Gleitspiel mit dieser zusammenarbeiten.
